# EUROPEAN PATENT SPECIFICATION

(11) **EP 1 325 381 B1**
(45) Date of publication and mention of the grant of the patent: **21.04.2004**
(21) Application number: 01969941.2
(22) Date of filing: 20.09.2001
(51) Int. Cl.: G02B 27/01, G02B 7/00

(54) **IMPROVEMENTS IN OR RELATING TO OPTICAL COMBINER ASSEMBLIES**
VERBESSERUNGEN AN ODER IN ZUSAMMENHANG MIT OPTISCHEN SUPERPOSITIONSVORRICHTUNGEN
AMELIORATIONS APPORTEES ET RELATIVES A DES ENSEMBLES COLLIMATEURS DE PILOTAGE

(30) Priority: 13.10.2000 GB 0025119
(43) Date of publication of application: 09.07.2003
(73) Proprietor: BAE SYSTEMS Electronics Ltd., Farnborough, Hampshire GU14 6YU (GB)
(72) Inventor: CHEESEMAN, Edward, Rochester, Kent ME1 2XX (GB)
(74) Representative: Rooney, Paul Blaise
(86) International application number: PCT/GB2001/004194
(87) International publication number: WO 2002/031582

(56) References cited:
- GB-A- 1 132 769
- GB-A- 2 174 213
- GB-A- 2 179 716
- US-A- 4 664 475

## Description

The present invention relates to optical combiner assemblies having a combiner through which a user views a scene overlaid with a projected image. Such combiner assemblies can be used in head up displays.

An optical combiner assembly for use in a head up display typically comprises an optical combiner mounted to a housing which is arranged for mounting to a roof structure of a flight deck of an aircraft. The combiner comprises a semi-reflective surface and is arranged to present flight, navigation, guidance and other information to a user who views a scene through the combiner. This is accomplished by projecting images from a display forming section, for example a cathode ray tube, onto the semi-reflective surface which is arranged to allow the user to view the scene through the combiner and to reflect the images from the display forming section along a line of sight of the user. The image conveyed to the user is collimated and conformal such that the user views the scene overlaid with the projected image. Typically, the combiner is pivotally mounted, not illustrated, to the housing such that the combiner can be moved from a stowed position above the head of the user to a deployed position in front of the user and coincident with the line of sight of the user.

However, if the combiner is not properly secured in the stowed position it can fall from its position such that it interferes with the vision of the user, or worse, impact the head of the user. Furthermore, should the user move forward while the combiner is in the deployed position, perhaps due to the aircraft flying into turbulent air, and impacts the combiner then this could interfere with the safe and proper handling of the aircraft. Also, the physical space available in the flight deck of an aircraft could prohibit the mounting of a combiner assembly to the roof structure of the flight deck as sufficient head clearance for a user from the combiner cannot be achieved.

It is an object of the present invention to provide an optical combiner assembly which obviates or mitigates the problems associated with the prior art.

According to the present invention an optical combiner assembly comprises a first portion arranged to rotate around a second portion and the mean distance between the first and second portions is arranged to vary with angular rotation of the first portion around the second portion, and a mounting assembly coupled to the first and second portions and arranged to carry the combiner wherein variations in the mean distance during angular rotation of the first portion around the second portion serves to manoeuver the combiner, through the mounting assembly, between a stowed position and a deployed position.

In this manner, the optical combiner rotates around the second portion such that it traverses a path wherein the mean distance between the combiner and the second portion varies and the combiner is moved from a stowed position to a deployed position, through which the user can view a scene, and from the deployed position back to the stowed position, thereby reducing the risk of the combiner coming into contact with the user as the combiner moves to or from the stowed position. Therefore, the combiner can be mounted to one side of the head of a user thereby ensuring adequate head clearance between the combiner and the head of the user.

The mounting assembly may comprise a first arm pivotally mounted at one end to the combiner at a first pivot point and rotationally mounted at the other end to the second portion at a first rotational point to provide rotational movement of the combiner around the second portion, a second arm pivotally mounted at one end to the combiner at a second pivot point and rotationally mounted at the other end to the first portion at a second rotational point to manoeuver the combiner between the stowed and deployed positions during angular rotation of the first portion around the second portion.

Preferably, an adjustable means may be associated with at least one of the arms and may be arranged to vary in length to facilitate variations in the mean distance between the first and second portions with angular rotation of the first portion around the second portion. The adjustable means may be associated with the second arm. The adjustable means may be a sliding portion arranged to slide in a cooperating track.

The first portion may be biased towards the second portion. For example the first portion may be biased towards the second portion using a suitable spring means acting between the first and second portions.

The first and second pivot points and first and second rotational points may be arranged to manoeuver the combiner between a substantially horizontal stowed position and a substantially vertical deployed position.

Preferably, the first and second pivot points may be arranged to allow the combiner, when in the deployed position, to rotate from the deployed position to a further position thereby to allow a degree of movement for the combiner should a user impact the combiner. The second arm may comprise a knee joint arranged to allow the combiner to rotate from the deployed position to the further position. Alternatively, the second arm may comprise a strut having a spring arranged to allow the combiner to rotate from the deployed position to the further position.

The second arm may comprise a knee joint arranged to allow the combiner to rotate through the further position thereby to allow a further degree of movement for the combiner should a user impact the combiner. Alternatively, the second arm may comprise a strut having a spring arranged to allow the combiner to rotate through the further position thereby to allow a further degree of movement for the combiner should a user impact the combiner.

In one embodiment, the first and second portions may respectively comprise first and second bearing surfaces arranged to cooperate with one another, the second bearing surface may be fixed and the first bearing surface may be arranged to move on the second bearing surface. Preferably, the second bearing surface may be arranged to provide a substantially constant radial pathway for the first bearing surface. For example, the second bearing surface may be circular. Alternatively, the second bearing surface may be arranged to provide a variable radial pathway for the first bearing surface. For example, the second bearing surface may be elliptical. The second bearing surface may be provided by a track and the first bearing surface may be arranged to run within the track.

In an alternative embodiment the first portion may comprise a bearing surface arranged to rotate within an aperture within a ring, the ring being arranged to rotate around the second portion on a bearing assembly. The ring may be arranged to provide a substantially constant radial pathway for the bearing surface. For example, the ring may be a circular. Alternatively, the ring may arranged to provide a variable radial pathway for the bearing surface. For example, the ring may be elliptical.

The invention will now be described, by way of example only, with reference to the accompanying drawings, in which:
Figure 1 illustrates, in side elevation and partial cross section, a first embodiment of a optical combiner assembly according to the present invention, wherein a combiner is in a deployed position;
Figure 2 illustrates, in side elevation and partial cross section, the first embodiment as shown in Figure 1, wherein the combiner is in a stowed position;
Figures 3a and 3b illustrate, an aerial view and in cross section, the pathway traversed by a first portion around a second portion in accordance with the first embodiment as the combiner moves between the deployed and stowed positions shown respectively in Figures 1 and 2;
Figure 4 illustrates, in side elevation and partial cross section, an alternative embodiment of the present invention, wherein a combiner is in a deployed position;
Figures 5 and 6 illustrate, in aerial view, alternative pathways which can be traversed by a first portion around a second portion as a combiner moves between a deployed position and a stowed position;
Figure 7 illustrates an aerial view of a further alternative embodiment of the invention, and
Figure 8 illustrates an aerial view of an alternative embodiment to that shown in Figure 7.

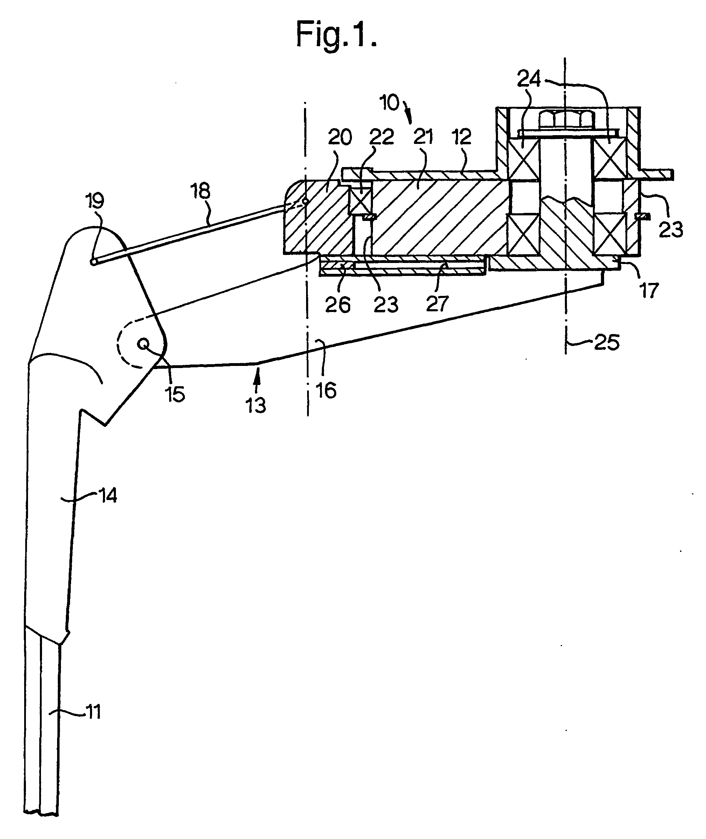

In Figure 1, an optical combiner assembly 10 comprises an optical combiner 11 mounted to a housing 12 using a mounting assembly 13 which is arranged for mounting to a roof structure, not shown, of a flight deck of an aircraft. The combiner assembly 10 is arranged to present flight, navigation, guidance and other useful information to a user overlaid on a scene, typically a scene outside the aircraft, viewed by the user through the combiner 11. That is, the combiner 11 provides a head-up display. The combiner 11 is mounted within a frame 14 which is arranged to be mounted to the housing 12. The combiner 11 comprises a suitable material such as glass which is capable of reflecting images generated by a display forward section, not illustrated, along a line of sight to the user of the combiner 11, such that the user will perceive the scene overlaid with images generated by the display forward section and reflected by the combiner 11. The image conveyed to user is collimated and conformal with other design parameters considered when manufacturing a combiner assembly 10.

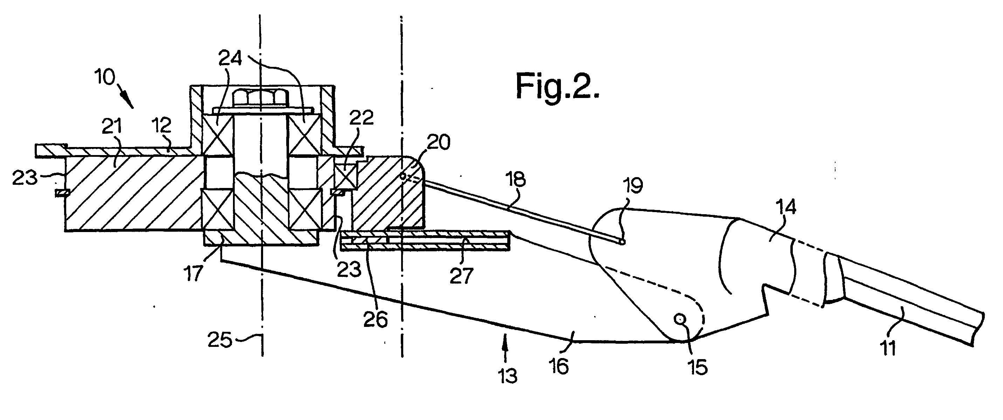

The frame 14 of the combiner assembly 10 has a first pivot point 15 which is attached to a first arm 16 which is also rotationally attached to the housing 12 via a second portion 17 located at a position remote from the first pivot point 15. The first arm 16 is arranged to allow the combiner 11 to rotate around the housing 12 between a deployed position, as shown in Figure 1, and a stowed position, as shown in Figure 2.

A second arm 18 is pivotally connected to the frame 14 at a second pivot point 19, at a position spaced apart from the first pivot point 15, and also rotationally attached to the housing 12 via a first portion 20, located remote from the second pivot point 19 and at a position spaced from the first portion 17. The second arm 18 can take the form of a spring biased strut or a knee joint, described in greater detail below. It will be understood that the first and second arms 16 and 18 constitute the mounting assembly connecting the frame 14 and combiner 11 to the housing 12.

First portion 20 is arranged to rotate around a cam 21 on a bearing assembly 22 arranged between the first portion 20 and a camming surface 23 of the cam 21. The second portion 17 is mounted for rotation in a bearing assembly 24 contained within the housing 12 and/or the cam 21.

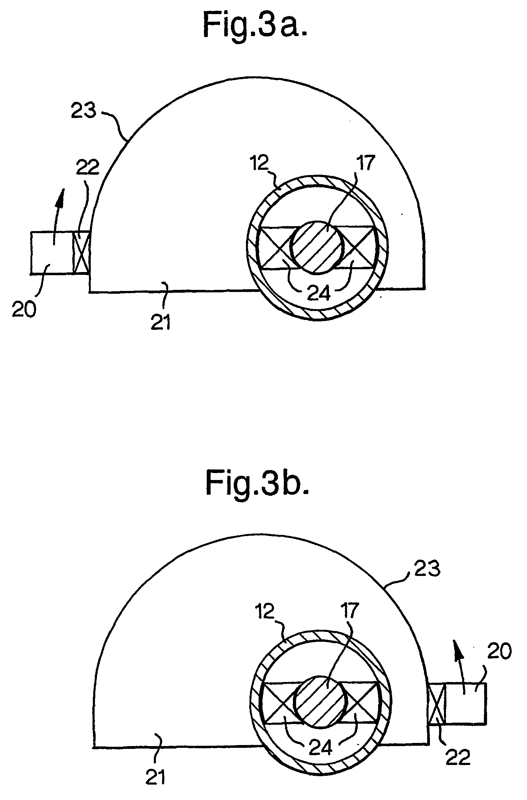

From Figures 3a and 3b, in which like references have been used to indicate similar integers to those illustrated in Figures 1 and 2, it can be seen that first portion 20 follows camming surface 23 in an orbit about cam 21 and second portion 17. Accordingly, the first portion 20 moves from a first position as shown in Figure 3a to a second position as shown in Figure 3b, wherein the first portion 20 is closer to the second portion 17 in the second position than in the first position.

Again referring to Figures 1 and 2, it can be seen that as the combiner 11 moves between the deployed position, Figure 1, and the stowed position, Figure 2, the second arm 18 is pulled towards the second portion 17 such that the combiner 11 attached to second arm 18 is moved between a substantially vertical position and a substantially horizontal position.

In this manner a combiner assembly can be positioned to this side of the head of a user in a position above the user such that the combiner can be rotated from a substantially horizontal stowed position around an axis 25 through the centre of the second portion 17, down to a substantially vertical deployed position.

As the first portion 20 is required to move closer to the second portion 17, the first portion 20 is arranged to move within an adjustable means. The adjustable means can comprise a sliding portion 26 formed in or attached to the first portion 20 and which is arranged to slide in a cooperating track portion 27 formed in or attached to the first arm 16. The sliding portion 26 can be biased towards the second portion 17 using a suitable spring biasing means, not illustrated.

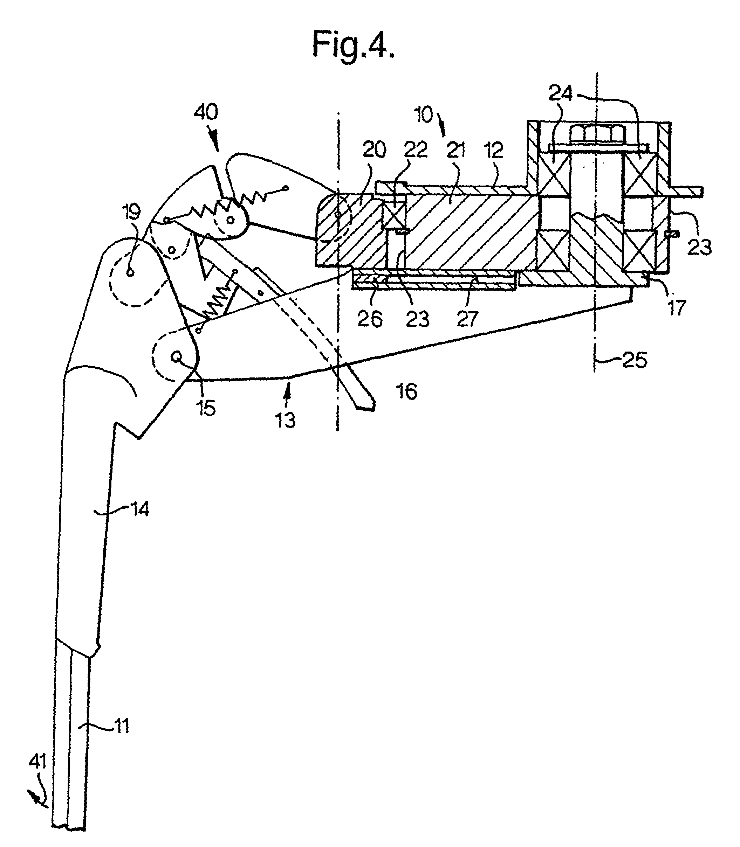

In Figure 4, like references have been used to indicate similar integers to those illustrated in Figures 1 and 2. However, the second arm 18 of Figures 1 and 2 has been replaced by a knee joint 40 arranged to allow the combiner 11 and frame 14 to rotate from the deployed position to a further forward position. The direction of rotation is indicated by arrow 41.

This feature allows for the incident when a user of the combiner 11 accidentally or otherwise impacts the combiner 11 such that it will rotate about the first pivot point 15 from the position shown in Figure 4 to a more forward position where it is retained by a detent arrangement associated with the knee joint 40 until the user manually returns the combiner 11 to its original position. The detent arrangement can be arranged to allow the combiner 11 to move forward but only to the airframe limits of the aircraft to prevent damage to either the airframe, which may be glass, or the combiner 11.

Furthermore, if, while the combiner 11 is in the forward position, the user impacts the combiner 11, a spring arrangement, associated with the knee joint 40 will allow the combiner 11 to rotate about the first pivot point 15 to a more forward position. Once the user stops applying pressure to the combiner 11 it will return under the bias of the spring to the detent of the further position and can only be returned to the proper deployed position when the user manually moves it to that position. These features reduce the injurious affects on the user due to impact with the combiner 11 by cushioning the blow since the combiner 11 is able to rotate to one or more forward positions. The combiner assembly 10 can also comprise switch means to insure that should the combiner 11 be moved to the forward position or the more forward position that the display forming section, not shown, will be switched off such that spurious images are not projected onto the combiner 11 which could be misread due to misalignment of the combiner 11. This can be achieved by arranging a switch or an electronic device to detect movement of the frame 14 within specified limits such that when the combiner moves to a given forward position, rotation around the first pivot point 15 is detected and causes the switch or electronic device to prohibit images, from display forward means, from being projected to the combiner 11.

It will be understood that the combiner 11 when in the stowed position does not protrude into the head space of a user therefore providing greater head room for the user and mitigating the possibility of the head of the user impacting against part of the combiner assembly 10 when the user reaches forward.

The housing 12 can be mounted on a mounting plate, not illustrated, which is further mounted to the roof structure of a flight deck such that adjustment screws associated with the mounting plate can be manipulated to allow alignment of the combiner 11 in rotation, sideways, forward and aft directions. Furthermore, the frame 14 retaining the combiner 11 can also allow adjustment of the combiner 11 in elevation. Adjustment of the combiner assembly 10 can be completed on a purpose built optical alignment jig prior to mounting of the combiner assembly 10 within the aircraft or in the aircraft while the combiner assembly 10 is in situ. In the former case, the combiner assembly 10 would not require further adjustment after installation and this will also allow combiner assemblies 10 to be readily interchangeable.

Referring to Figure 4, the first arm 16 also carries a release mechanism 42 arranged to cooperate with the knee joint 40 to latch the combiner 11 in either the stowed or the deployed position. A user operates the release mechanism 42 to delatch the combiner 11 so that the user can move the combiner 11 between the deployed position and the stowed position. When in the stowed position the user operates release mechanism 42, to delatch the combiner 11 so that it can rotate to the deployed position. The reverse is also true when moving the combiner 11 from the deployed position to the stowed position.

A further advantage of the combiner assembly 10 is that should the combiner 11 not be properly latched in the stowed position and should fall from this position, then it is less likely to impact the head of the user and movement from this position will indicate to the user that it is not latched in the correct stowed position. The user can then move the combiner 11 back to a proper latched stowed position.

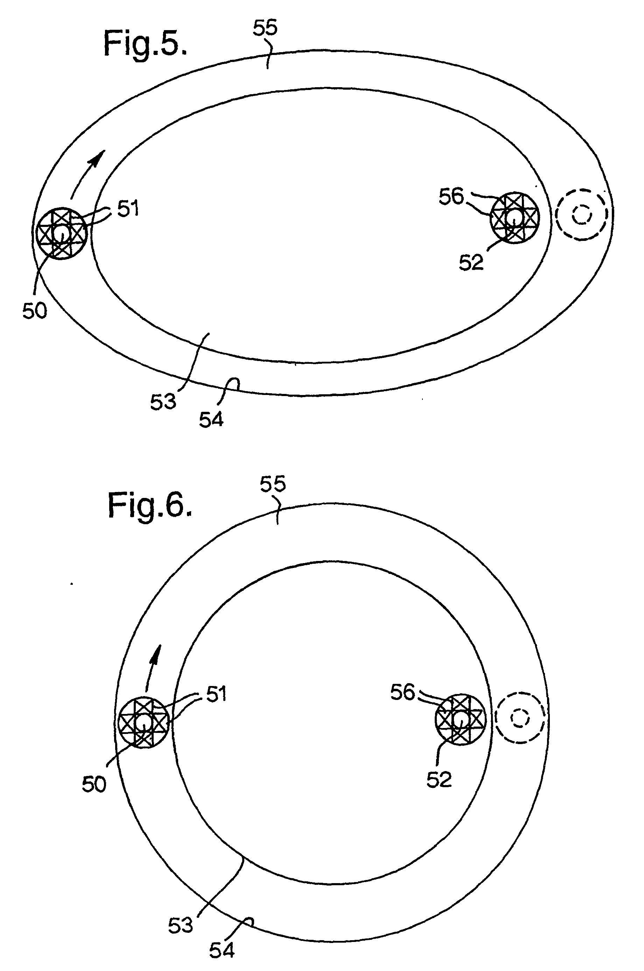

Figures 5 and 6, illustrate alternative embodiments to those described with reference to Figures 1 to 4, wherein a first portion 50 is arranged within a bearing assembly 51 to orbit a second portion 52 within camming surfaces 53 and 54 of a track 55. In this manner the first portion 50 can be moved between a first position indicated in solid lines and a second position indicated in dotted lines. Again the first portion 50 can be moved between positions wherein it can be moved closer or further away from the second portion 52. The second portion 52 is also mounted for rotation within a bearing assembly 56 formed within a housing and or a cam. In this instance the track 55 is elliptical to allow a varying radial motion of the first portion 50.

In Figure 6, like references have been used to indicate similar integers to those illustrated in Figure 5. In this instance the track 55 is circular to allow constant radial movement of the first portion. In both the embodiments shown in Figures 5 and 6 there will be no need for an adjustable means as required for the embodiments shown in Figures 1 to 4.

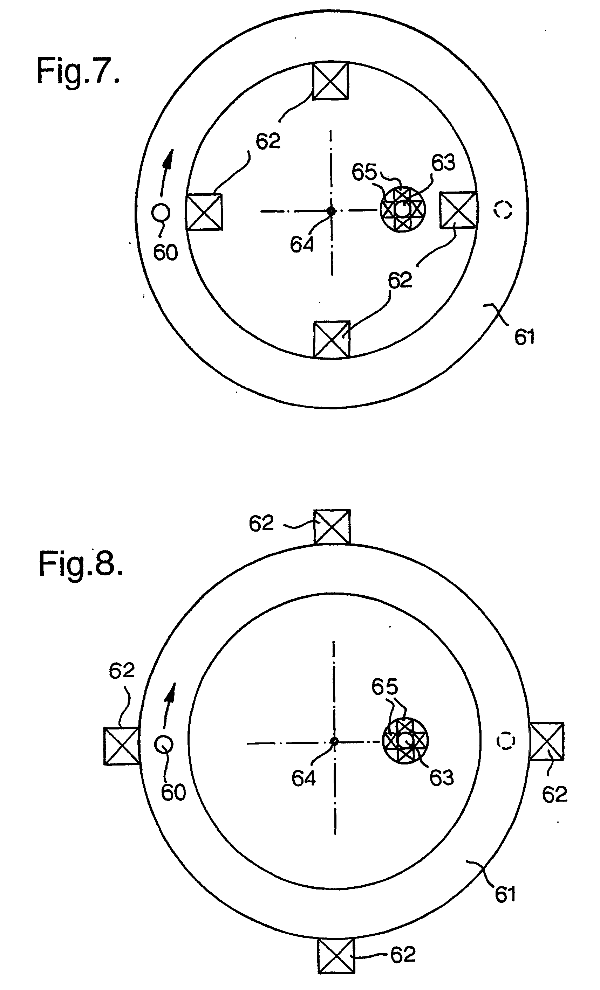

Figures 7 and 8, illustrate alternative embodiments to those discussed with reference to Figures 1 to 6, wherein a first portion 60 is arranged to form part of or within a ring 61 arranged to rotate with respect to a bearing assembly 62 such that first portion 60 orbits a second portion 63. The ring 61 rotates on the bearing assemblies 62 around a central position 64. In this manner the first portion 60 can be moved between a first position indicated in solid lines and a second position indicated in dotted lines. Again, the first portion 60 can be moved between position wherein it can be moved closer or further away from the second portion 63. The second portion 63 is also mounted for rotation within a bearing assembly 65 formed within a housing or a cam. In this instance the ring 61 is elliptical to allow a varying radial motion of the first portion 60.

In Figure 8, like references have been used to indicate similar integers to those illustrated in Figure 7. In this instance the ring 61 is circular to allow constant radial movement of the first portion 60. In both the embodiments shown in Figures 7 and 8, there will be no need for an adjustable means as required for the embodiments shown in Figures 1 to 4.

It will also be understood, that the bearing assemblies may either be positioned internal, external or both internally or externally of the ring 61.

It will be understood that although the optical combiner assembly 10 is described with reference to a head up display for an aircraft, it is envisaged that the combiner assembly 10 could be used in alternative means of transport or other environments in which information needs to be conveyed to a user and overlaid on the user's view of a forward scene.

## Claims

1. An optical combiner assembly (10), comprising
a first portion (20) arranged to rotate around a second portion (17) wherein the mean distance between the first and second portions is arranged to vary with angular rotation of the first portion around the second portion, and
a mounting assembly (13) coupled to the first and second portions and arranged to carry a combiner (11) wherein variations in the mean distance during angular rotation of the first portion around the second portion serves to manoeuver the combiner, through the mounting assembly, between a stowed position and a deployed position.

2. An optical combiner assembly, as in Claim 1, wherein the mounting assembly comprises a first arm (16) pivotally mounted at one end to the combiner (11) at a first pivot point and rotationally mounted at the other end to the second portion (17) at a first rotational point to provide rotational movement of the combiner around the second portion, a second arm (18) pivotally mounted at one end to the combiner at a second pivot point and rotationally mounted at the other end to the first portion (20) at a second rotational point to manoeuver the combiner between the stowed and deployed positions during angular rotation of the first portion around the second portion.

3. An optical combiner assembly, as in Claim 2, wherein an adjustable means (26) is associated with at least one of the arms and is arranged to vary in length to facilitate variations in the mean distance between the first and second portions with angular rotation of the first portion around the second portion.

4. An optical combiner assembly, as in Claim 3, wherein the adjustable means is associated with the second arm.

5. An optical combiner assembly, as in Claims 3 or 4, wherein the adjustable means is a sliding portion (26) arranged to slide in a cooperating track.

6. A optical combiner assembly, as in any preceding claim, wherein the first portion is biased towards the second portion.

7. An optical combiner assembly, as in Claims 2 to 6, wherein the first and second pivot points and first and second rotational points are arranged to manoeuver the combiner between a substantially horizontal stowed position and a substantially vertical deployed position.

8. An optical combiner assembly, as in Claims 2 to 7, wherein the first and second pivot points are arranged to allow the combiner, when in the deployed position, to rotate from the deployed position to a further position thereby to allow a degree of movement for the combiner should a user impact the combiner.

9. An optical combiner assembly, as in Claim 8, wherein the second arm comprises a knee joint (40) arranged to allow the combiner to rotate from the deployed position to the further position.

10. An optical combiner assembly, as in Claim 8, wherein the second arm comprises a strut having a spring arranged to allow the combiner to rotate from the deployed position to the further position.

11. An optical combiner assembly, as in Claims 8 to 10, wherein the second arm comprises a knee joint (40) arranged to allow the combiner to rotate through the further position thereby to allow a further degree of movement for the combiner should a user impact the combiner.

12. An optical combiner assembly, as in Claim 8 to 10, wherein the second arm comprises a strut having a spring arranged to allow the combiner to rotate through the further position thereby to allow a further degree of movement for the combiner should a user impact the combiner.

13. An optical combiner assembly, as in any preceding claim, wherein the first and second portions respectively comprise first (50) and second (55) bearing surfaces arranged to cooperate with one another, the second bearing surface is fixed and the first bearing surface is arranged to move on the second bearing surface.

14. An optical combiner assembly, as in Claim 13, wherein the second bearing surface is arranged to provide a substantially constant radial pathway for the first bearing surface.

15. An optical combiner assembly, as in Claim 13, wherein the second bearing surface is arranged to provide a variable radial pathway for the first bearing surface.

16. An optical combiner assembly, as in Claims 13 to 15, wherein the second bearing surface is provided by a track (55) and the first bearing surface is arranged to run within the track.

17. An optical combiner assembly, as in Claims 1 to 12, wherein the first portion comprises a bearing surface (60) arranged to rotate within an aperture within a ring (61), the ring being arranged to rotate around the second portion (63) on a bearing assembly (62)

18. An optical combiner assembly, as in Claim 17, wherein the ring is arranged to provide a substantially constant radial pathway for the bearing surface.

19. An optical combiner assembly, as in Claim 17, wherein the ring is arranged to provide a variable radial pathway for the bearing surface.

20. A head up display having an optical combiner assembly as in Claims 1 to 19.

21. Use of an optical combiner assembly, as in Claims 1 to 19, in an aircraft.

## Patentansprüche

1. Optischer Superpositionsaufbau (10)
mit einem ersten Teil (20), der um einen zweiten Teil (17) drehbar ist, wobei der mittlere Abstand zwischen dem ersten und zweiten Teil sich mit der Winkeldrehung des ersten Teils um den zweiten Teil ändert, und
mit einer Lageranordnung (13), die mit dem ersten und dem zweiten Teil gekoppelt und so angeordnet ist, dass sie eine Superpositionsvorrichtung (11) trägt, wobei eine Veränderung des mittleren Abstands während der Winkeldrehung des ersten Teils um den zweiten Teil dazu dient, die Superpositionsvorrichtung über die Lageranordnung zwischen einer Verstauposition und einer Einsatzposition zu manövrieren.

2. Optischer Superpositionsaufbau nach Anspruch 1, bei welchem die Lageranordnung einen ersten Arm (16) aufweist, der schwenkbar an einem Ende an der Superpositionsvorrichtung (11) an einem ersten Schwenkpunkt angelenkt und drehbar am anderen Ende mit dem zweiten Teil (17) an einem ersten Drehpunkt drehbar gelagert ist, um eine Drehbewegung der Superpositionsvorrichtung um den zweiten Teil zu bewirken, wobei ein zweiter Arm (18) schwenkbar an einem Ende der Superpositionsvorrichtung an einem zweiten Schwenkpunkt angelenkt und drehbar am anderen Ende des ersten Teils (20) in einem zweiten Drehpunkt gelagert ist, um die Superpositionsvorrichtung zwischen der Verstauposition und der Einsatzposition während der Winkeldrehung des ersten Teils um den zweiten Teil zu manövrieren.

3. Optischer Superpositionsaufbau nach Anspruch 2, bei welchem die einstellbaren Mittel (26) wenigstens einem Arm zugeordnet und so ausgebildet sind, dass sie sich in der Länge verändern, um den mittleren Abstand zwischen dem ersten und zweiten Teil bei der Winkeldrehung des ersten Teils um den zweiten Teil zu verändern.

4. Optischer Superpositionsaufbau nach Anspruch 3, bei welchem die einstellbaren Mittel dem zweiten Arm zugeordnet sind.

5. Optischer Superpositionsaufbau nach den Ansprüchen 3 oder 4, bei welchem die einstellbaren Mittel einen Gleitabschnitt (26) bewirken, der in einer hiermit zusammenwirkenden Führung läuft.

6. Optischer Superpositionsaufbau nach einem der vorhergehenden Ansprüche, bei welchem der erste Teil gegen den zweiten Teil vorgespannt ist.

7. Optischer Superpositionsaufbau nach den Ansprüchen 2 bis 6, bei welchem die ersten und zweiten Schwenkpunkte und die ersten und zweiten Drehpunkte so angeordnet sind, dass sie die Superpositionsvorrichtung zwischen einer im Wesentlichen horizontalen Verstauposition und einer im Wesentlichen vertikalen Einsatzposition manövrieren.

8. Optischer Superpositionsaufbau nach den Ansprüchen 2 bis 7, bei welchem die ersten und zweiten Schwenkpunkte so angeordnet sind, dass sich die Superpositionsvorrichtung, wenn sie sich in der Einsatzposition befindet, von der Einsatzposition in eine weitere Position drehen kann, wodurch eine bestimmte Bewegung der Superpositionsvorrichtung möglich wird, falls der Benutzer an der Superpositionsvorrichtung aufprallt.

9. Optischer Superpositionsaufbau nach Anspruch 8, bei welchem der zweite Arm ein Kniegelenk (40) aufweist, wodurch die Superpositionsvorrichtung aus der Einsatzposition in die weitere Position drehbar wird.

10. Optischer Superpositionsaufbau nach Anspruch 8, bei welchem der zweite Arm eine Strebe mit einer Feder aufweist, damit sich die Superpositionsvorrichtung von der Einsatzposition in die weitere Position drehen kann.

11. Optischer Superpositionsaufbau nach den Ansprüchen 8 bis 10, bei welchem der zweite Arm ein Kniegelenk (40) aufweist, das so angeordnet ist, dass sich die Superpositionsvorrichtung über die weitere Position drehen kann, wodurch eine weitere Bewegungsstrecke für die Superpositionsvorrichtung geschaffen wird, falls der Benutzer auf die Superpositionsvorrichtung aufprallt.

12. Optischer Superpositionsaufbau nach den Ansprüchen 8 bis 10, bei welchem der zweite Arm eine Strebe mit einer Feder aufweist, die so angeordnet sind, dass sich die Superpositionsvorrichtung über die weitere Position drehen kann, wodurch eine weitere Bewegungsstrecke für die Superpositionsvorrichtung geschaffen wird, falls der Benutzer auf die Superpositionsvorrichtung aufprallt.

13. Optischer Superpositionsaufbau nach einem der vorhergehenden Ansprüche, bei welchem die ersten und zweiten Teile jeweils erste (50) und zweite (55) Lageroberflächen aufweisen, die zusammenwirken, wobei die zweite Lageroberfläche fest angeordnet ist und die erste Lageroberfläche sich auf der zweiten Lageroberfläche bewegt.

14. Optischer Superpositionsaufbau nach Anspruch 13, bei welchem die zweite Lageroberfläche einen im Wesentlichen konstanten radialen Pfad für die erste Lageroberfläche bildet.

15. Optischer Superpositionsaufbau nach Anspruch 13, bei welchem die zweite Lageroberfläche einen variablen radialen Pfad für die erste Lageroberfläche bildet.

16. Optischer Superpositionsaufbau nach den Ansprüchen 13 bis 15, bei welchem die zweite Lageroberfläche mit einer Führung (55) versehen ist und die erste Lageroberfläche innerhalb der Führung läuft.

17. Optischer Superpositionsaufbau nach den Ansprüchen 1 bis 12, bei welchem der erste Teil eine Lageroberfläche (60) aufweist, die innerhalb einer Öffnung eines Ringes (61) drehbar ist, wobei der Ring sich um den zweiten Teil (63) in einer Lageranordnung (62) dreht.

18. Optischer Superpositionsaufbau nach Anspruch 17, bei welchem der Ring einen im Wesentlichen konstanten radialen Pfad für die Lageroberfläche bildet.

19. Optischer Superpositionsaufbau nach Anspruch 17, bei welchem der Ring einen variablen radialen Pfad für die Lageroberfläche bildet.

20. Headup-Display mit einem optischen Superpositionsaufbau nach den Ansprüchen 1 bis 19.

21. Die Benutzung eines optischen Superpositionsaufbaus gemäß den Ansprüchen 1 bis 19 in einem Fluzgzeug.

## Revendications

1. Un ensemble combineur optique (10), comportant
une première portion (20) agencée pour tourner autour d'une deuxième portion (17) dans lequel la distance moyenne entre les première et deuxième portions est agencée pour varier avec la rotation angulaire de la première portion autour de la deuxième portion, et
un ensemble de montage (13) couplé aux première et deuxième portions et agencé pour porter un combineur (11) dans lequel des variations de la distance moyenne durant la rotation angulaire de la première portion autour de la deuxième portion servent à manoeuvrer le combineur, par le biais de l'ensemble de montage, entre une position rangée et une position déployée.

2. Un ensemble combineur optique, tel que dans la revendication 1, dans lequel l'ensemble de montage comporte un premier bras (16) monté de façon pivotante à une extrémité sur le combineur (11) à un premier point de pivotement et monté de façon rotative à l'autre extrémité sur la deuxième portion (17) à un premier point de rotation pour fournir le déplacement par rotation du combineur autour de la deuxième portion, un deuxième bras (18) monté de façon pivotante à une extrémité sur le combineur à un deuxième point de pivotement et monté de façon rotative à l'autre extrémité sur la première portion (20) à un deuxième point de rotation pour manoeuvrer le combineur entre les positions rangée et déployée durant la rotation angulaire de la première portion autour de la deuxième portion.

3. Un ensemble combineur optique, tel que dans la revendication 2, dans lequel un moyen ajustable (26) est associé à au moins un des bras et est agencé pour varier en longueur pour faciliter les variations de la distance moyenne entre les première et deuxième portions avec la rotation angulaire de la première portion autour de la deuxième portion.

4. Un ensemble combineur optique, tel que dans la revendication 3, dans lequel le moyen ajustable est associé au deuxième bras.

5. Un ensemble combineur optique, tel que dans les revendications 3 ou 4, dans lequel le moyen ajustable est une portion coulissante (26) agencée pour coulisser dans une piste coopérante.

6. Un ensemble combineur optique, tel que dans n'importe quelle revendication précédente, dans lequel la première portion est décalée en direction de la deuxième portion.

7. Un ensemble combineur optique, tel que dans les revendications 2 à 6, dans lequel les premier et deuxième points de pivotement et les premier et deuxième points de rotation sont agencés pour manoeuvrer le combineur entre une position rangée substantiellement horizontale et une position déployée substantiellement verticale.

8. Un ensemble combineur optique, tel que dans les revendications 2 à 7, dans lequel les premier et deuxième points de pivotement sont agencés pour permettre au combineur, lorsqu'il est dans la position déployée, de tourner depuis la position déployée jusqu'à une position supplémentaire pour donner de ce fait au combineur un degré de déplacement si un utilisateur venait à heurter le combineur.

9. Un ensemble combineur optique, tel que dans la revendication 8, dans lequel le deuxième bras comporte un genou (40) agencé pour permettre au combineur de tourner depuis la position déployée jusqu'à la position supplémentaire.

10. Un ensemble combineur optique, tel que dans la revendication 8, dans lequel le deuxième bras comporte une barre ayant un ressort agencé pour permettre au combineur de tourner depuis la position déployée jusqu'à la position supplémentaire.

11. Un ensemble combineur optique, tel que dans les revendications 8 à 10, dans lequel le deuxième bras comporte un genou (40) agencé pour permettre au combineur de traverser en tournant la position supplémentaire pour donner de ce fait au combineur un degré supplémentaire de déplacement si un utilisateur venait à heurter le combineur.

12. Un ensemble combineur optique, tel que dans les revendications 8 à 10, dans lequel le deuxième bras comporte une barre ayant un ressort agencé pour permettre au combineur de traverser en tournant la position supplémentaire pour donner de ce fait au combineur un degré supplémentaire de déplacement si un utilisateur venait à heurter le combineur.

13. Un ensemble combineur optique tel que dans n'importe quelle revendication précédente, dans lequel les première et deuxième portions comportent respectivement des première (50) et deuxième (55) surfaces à paliers agencées pour coopérer l'une avec l'autre, la deuxième surface à paliers est fixe et la première surface à paliers est agencée pour se déplacer sur la deuxième surface à paliers.

14. Un ensemble combineur optique, tel que dans la revendication 13, dans lequel la deuxième surface à paliers est agencée pour fournir une trajectoire radiale substantiellement constante pour la première surface à paliers.

15. Un ensemble combineur optique, tel que dans la revendication 13, dans lequel la deuxième surface à paliers est agencée pour fournir une trajectoire radiale variable pour la première surface à paliers.

16. Un ensemble combineur optique, tel que dans les revendications 13 à 15, dans lequel la deuxième surface à paliers est fournie par une piste (55) et la première surface à paliers est agencée pour passer dans la piste.

17. Un ensemble combineur optique, tel que dans les revendications 1 à 12, dans lequel la première portion comporte une surface à paliers (60) agencée pour tourner dans une ouverture au sein d'un anneau (61), l'anneau étant agencé pour tourner autour de la deuxième portion (63) sur un ensemble à paliers (62).

18. Un ensemble combineur optique, tel que dans la revendication 17, dans lequel l'anneau est agencé pour fournir une trajectoire radiale substantiellement constante pour la surface à paliers.

19. Un ensemble combineur optique, tel que dans la revendication 17, dans lequel l'anneau est agencé pour fournir une trajectoire radiale variable pour la surface à paliers.

20. Un viseur tête haute ayant un ensemble combineur optique tel que dans les revendications 1 à 19.

21. Utilisation d'un ensemble combineur optique, tel que dans les revendications 1 à 19, dans un aéronef.
